# NEUE EUROPÄISCHE PATENTSCHRIFT

(11) **EP 3 892 352 B2**
(45) Veröffentlichungstag und Bekanntmachung des Hinweises auf die Entscheidung über den Einspruch: **02.09.2026**
(45) Hinweis auf die Patenterteilung: 30.08.2023
(21) Anmeldenummer: 20168346.3
(22) Anmeldetag: 07.04.2020
(51) Int. Cl.: B01D 46/00, B01D 46/10, B01D 46/52

(54) **FILTER MIT DICHTUNGSVERGUSSMASSE UND FILTERANORDNUNG MIT SOLCHEM FILTER**
FILTER WITH SEALING COMPOUND AND FILTER ASSEMBLY WITH SUCH A FILTER
FILTRE POURVU D'UNE MASSE DE REMPLISSAGE D'ÉTANCHÉITÉ ET SYSTÈME DE FILTRE DOTÉ D'UN TEL FILTRE

(43) Veröffentlichungstag der Anmeldung: 13.10.2021
(73) Patentinhaber: Carl Freudenberg KG, 69469 Weinheim (DE)
(72) Erfinder: Sieh, Maik, 69207 Sandhausen (DE); Schumacher, Sascha, 69483 Wald-Michelbach (DE); Menzio, Giacomo, 10139 Torino (IT); Beisel, Marcel, 64760 Oberzent (DE); Papa, Sergio, 10141 Torino (IT)
(74) Vertreter: Lorenz Seidler Gossel Part. mbB

(56) Entgegenhaltungen:
- DE-A1- 10 321 068
- DE-U1- 20 101 237
- DE-U1- 202008 007 292
- US-A1- 2002 104 299

## Beschreibung

Die Erfindung betrifft einen Filter gemäß dem Oberbegriff von Anspruch 1 und eine Filteranordnung mit solchem Filter gemäß dem Anspruch 10.

### Stand der Technik

Aus der EP 3 520 878 A1 ist ein Filter bekannt, der einen Rahmen aus extrudierten Profilleisten besitzt. In den Rahmen können Filtermedien für verschiedenen Filterstufen eingesetzt und eingeklebt werden. Am Rahmen ist zusätzlich eine Dichtung vorgesehen, welche den Filter gegen eine Filteraufnahme abdichtet. Nachteilig ist, dass die Dichtung separat angebracht werden muss.

Die US 2005/0284116 A1 zeigt einen Filter dessen plissiertes Filtermedium in u-förmige, flexible Leisten eingeklebt wird. Das plissierte Filtermedium, auch als Faltenbalg bezeichnet, wird direkt in die Leisten eingeklebt und besitzt keine Kantenstreifen. Erst durch das Einkleben in den Rahmen erhält der Faltenbalg eine ausreichende Stabilität. Die Leisten können eine Dichtlippe aufweisen und durch Extrusion hergestellt sein. Nachteilig ist, dass die Leisten nur eine geringe Eigenstabilität aufweisen und ein zusätzliches Versteifungselement eingebracht werden muss.

Die US 2002/104299 A1 und DE 20 2008 007 292 U1 und DE 103 21 068 A1 zeigen Filter, bei welchen ein Faltenbalg mit einem Rahmen verklebt wird. Bei der US 2002/104299 A1 und DE 20 2008 007 292 U1 wird jeweils ein Abschnitt des Filtermediums in einem Vergussraum aufgenommen und vergossen, nämlich die Endfalte des plissierten Filtermediums.

### Aufgabenstellung

Aufgabe der vorliegenden Erfindung ist es einen Filter zu schaffen, welcher einfach und kostengünstig gefertigt werden kann, auch bei Vorhandensein von Varianten in unterschiedlichen Größen.

### Technische Lösung

Gelöst wird diese Aufgabe durch einen Filter mit den Merkmalen von Anspruch 1 mit den dort enthaltenen erfindungsgemäßen Optionen a), b) und/oder c).

Erfindungsgemäß wurde als vorteilhaft erkannt, das plissierte Filtermedium mit mindestens einem Kantenstreifen zu versehen und Kantenstreifen und Rahmen durch Verguss miteinander zu verbinden. Dies wird nachfolgend näher erläutert:
Der erfindungsgemäße Filter besitzt ein Filterelement mit einem Filtermedium zum Filtern eines Fluidstroms, insbesondere eines Luftstroms, wobei das Filtermedium plissiert ist. Der Filter besitzt weiter einen Rahmen zur Aufnahme des Filterelements, insbesondere einen so genannten Kopfrahmen. Der Rahmen ist dabei nicht mit einem den Filter aufnehmenden Gehäuse zu verwechseln. Erfindungsgemäß ist das Filterelement mittels einer Dichtungs-Vergussmasse mit dem Rahmen verklebt und der mindestens eine Kantenstreifen wird von einem Vergussraum aufgenommen:
Beim erfindungsgemäßen Filter besitzt der Rahmen einen nutförmigen und umlaufenden Vergussraum, welcher insbesondere nur zu einer Seite hin geöffnet ist. Der Vergussraum dient dazu, die Dichtungsvergussmasse aufzunehmen.

Das Filtermedium wird erfindungsgemäß von mindestens einem Kantenstreifen umfasst, welcher auch als Kantenband bezeichnet werden kann. D. h. der Kantenstreifen ist Teil des Filterelements und befindet sich an den Außenkanten des plissierten Filtermediums, bildet also die in Durchströmungsrichtung liegenden Außenflächen des Faltenbalgs. Im Unterschied zu aus dem Stand der Technik bekannten Filtern weist der Filter also sowohl Kantenstreifen als auch Rahmen auf. Ein Abschnitt des Kantenstreifens, nämlich dessen Ende, wird in dem Vergussraum aufgenommen und von Dichtungs-Vergussmasse umschlossen. Bei der Dichtungs-Vergussmasse handelt es sich um ein gießfähiges, elastisches Material. Ein derartiger Filter hat den Vorteil, dass er einfach und kostengünstig gefertigt werden kann, da das Verkleben des Filterelements mit dem Rahmen des Filters besonders gut automatisiert werden kann, da das Filterelement durch das Vorahnensein des Kantenstreifens bereits über eine gute Eigenstabilität verfügt. Ein weiterer Vorteil ergibt sich durch die Gewichtsersparnis, da Metall nur dort eingesetzt wird, wo es aufgrund der Stabilität benötigt wird und Kantenstreifen leichter ist als ein ausschließlich aus Metall gebildeter Rahmen. Ein solcher Filter lässt sich auch kostengünstiger fertigen auf Grund der geringeren Materialkosten von Kantenstreifen gegenüber Metall.

Das Filterelement kann mindestens einen überstehenden Kantenstreifen haben, derart, dass die Höhe des Kantenstreifens größer ist als die Höhe des Faltenbalgs aus dem plissierten Filtermedium. In diesem Fall wird der von Dichtungs-Vergussmasse umschlossene Abschnitt durch den überstehenden Bereich des Kantenstreifens gebildet.

Gemäß der erfindungsgemäßen Option a) von Anspruch 1 weist der Rahmen angrenzend an den Boden des Vergussraums einen Hinterschnitt auf. Damit kann die Dichtungs-Vergussmasse auch in den Hinterschnitt eindringen zur Schaffung eines Formschlusses von Dichtungs-Vergussmasse und dem Rahmen, nachdem die Dichtungs-Vergussmasse erstarrt ist. Auf diese Weise wird eine besonders sichere Verbindung von Filterelement, Dichtungs-Vergussmasse und Rahmen erreicht.

Gemäß der erfindungsgemäßen Option b) von Anspruch 1 wurde erkannt, die Dichtungs-Vergussmasse für zwei Zwecke zu nutzen: Verbinden des Filterelements mit einem Rahmen und Ausbilden einer Dichtung:
Der Rahmen besitzt dabei eine umlaufende Dichtung. D. h. die Dichtung ist nicht zum Faltenbalg hin, sondern zur Abdichtung gegenüber einem dem Filter aufnehmenden Gehäuse bzw. gegenüber einer den Filter aufnehmenden Filteraufnahme orientiert und verläuft entlang der Außenkontur des Rahmens.

Dabei ist das Filterelement wie schon ausgeführt mittels einer Dichtungs-Vergussmasse mit dem Rahmen verklebt und die Dichtungs-Vergussmasse bildet gleichzeitig die am Rahmen umlaufende Dichtung aus.

Ein derartiger Filter hat den Vorteil, dass er einfach und kostengünstig gefertigt werden kann, da das Verkleben des Filterelements am Rahmen und das Aufbringen einer Dichtung in einem Arbeitsgang mit nur einem Material geschieht.

Bei Versuchen wurde herausgefunden, dass geschäumtes Polyurethan (PU) ein besonders geeignetes Material für die Dichtungs-Vergussmasse ist.

Gemäß der erfindungsgemäßen Option c) von Anspruch 1 ist der Rahmen aus extrudierten Leisten zusammengesetzt. Die extrudierten Leisten sind dabei bevorzugt aus einem biegesteifen Material, wie beispielsweise Kunststoff oder Metall, insbesondere einem thermoplastischen Kunststoff oder Aluminium und können als Extrusionsprofil bezeichnet werden.

In Weiterbildung des vorstehend beschriebenen Filters sind die Leisten mit Eckverbindern verbunden, zum Beispiel winkligen Blechen, und in den Leisten sind schlitzförmige Steckplätze vorgesehen zum Einführen der Eckverbinder. Steckplätze und Eckverbinder sind dabei insbesondere so ausgestaltet, dass eine Presspassung zwischen Steckplätzen und Eckverbindern besteht. Eine derartige Ausgestaltung hat den Vorteil, dass keine weiteren Fertigungsschritte zum Zusammenbau des Rahmens erforderlich sind, wie zum Beispiel Verschweißen, Verschrauben oder Vernieten. Es genügt vielmehr die Leisten zusammenzustecken. Durch die Dichtungs-Vergussmasse wird die Verbindung dann dauerhaft fixiert.

In vorteilhafter Weiterbildung des erfindungsgemäßen Filters besitzt der Rahmen mindestens einen Abstandshalter, zum Beispiel eine hervorstehende Nase oder einen erhabenen umlaufenden Steg, zur Begrenzung der maximalen Dichtungskompression der umlaufenden Dichtung in montiertem Zustand. Dazu ist der Abstandshalter an dem Rahmen angrenzend an die Dichtung und zum aufnehmenden Gehäuse hin oder zur aufnehmenden Filteraufnahme hin orientiert.

Bei dem Filtermedium kann es sich vorteilhaft um einen Vliesstoff handeln.

Die Erfindung betrifft auch eine Filteranordnung aufweisend einen wie vorstehend beschriebenen Filter und ein Gehäuse bzw. alternativ eine Filteraufnahme, wobei der Filter in dem Gehäuse bzw. alternativ in der Filteraufnahme formschlüssig aufgenommen ist. Der Filter kann in das Gehäuse bzw. die Filteraufnahme eingesetzt und - wenn ein Filterwechsel erforderlich ist - wieder entnommen werden.

Eine derartige Filteranordnung kann zum Beispiel in der Zuluftfiltration für Kabinen von landwirtschaftlichen Fahrzeugen Verwendung finden.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll an Hand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.

Es zeigen in schematischer Darstellung
- Fig. 1: eine Detailansicht einer Schnittdarstellung durch die Filteranordnung
- Fig. 2: einen Ausschnitt einer Schnittdarstellung durch den Filter
- Fig. 3: eine Schnittdarstellung durch den Rahmen des Filters

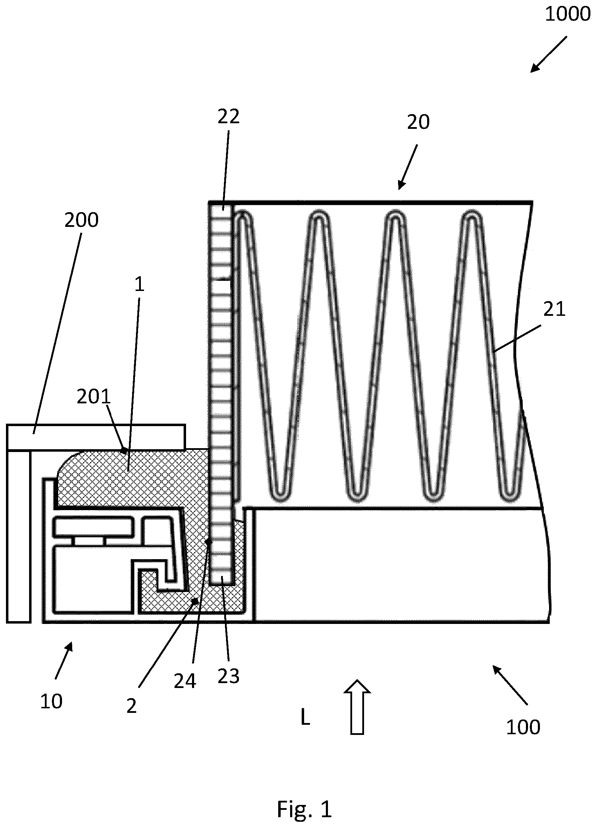

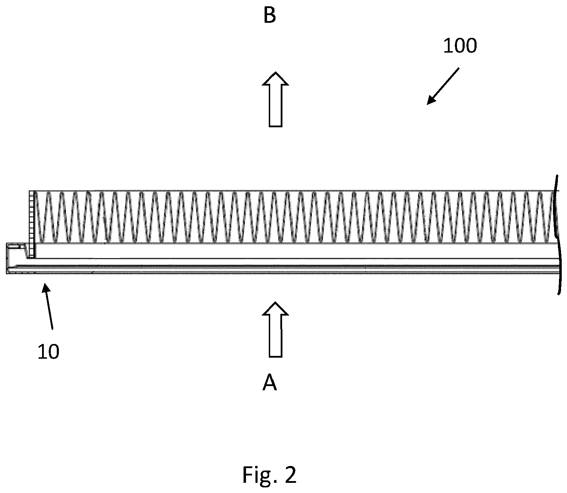

Figur 1 zeigt einen Ausschnitt einer Schnittdarstellung einer Filteranordnung 1000. Die Filteranordnung 1000 besitzt einen Filter 100, welcher in einem Gehäuse 200 aufgenommen wird. Der Filter 100 wird von einem Luftstrom L durchströmt, wobei der Luftstrom L gefiltert wird. Es erfolgt eine Durchströmung des Filters 10 mit dem Luftstrom L von einer Rohgasseite A hin zu einer Reingasseite B, siehe Fig.2.

Der Filter 100 besitzt ein Filterelement 20 und einen Rahmen 10. Das Filterelement 20 weist ein plissiertes Filtermedium 21 und einen Kantenstreifen 22 auf. Der Kantenstreifen 22 besitzt einen Abschnitt 23, welcher über den durch das plissierte Filtermedium 21 gebildeten Faltenbalg übersteht. Dieser Abschnitt 23 des Kantenstreifens 22 ragt in den Rahmen 10 hinein. Genauer: der Abschnitt 23 des Kantenstreifens 22 wird in dem nur nach oben hin geöffneten Vergussraum 12 des Rahmens 10 aufgenommen. Der Rahmen 10 ist mit einer Dichtungs-Vergussmasse 2 befüllt. Die Dichtungs-Vergussmasse 2 ist im Bereich einer Kontaktfläche 24 des Kantenstreifens 22 mit dem Kantenstreifen 22 des Filterelements 20 in Kontakt und bewirkt so eine Verklebung des Filterelements 20 mit dem Rahmen 10. Der Rahmen 10 wurde dabei derart mit der Dichtungs-Vergussmasse 2 befüllt, dass die Dichtungs-Vergussmasse 2 nicht nur ein Verkleben bewirkt, sondern auch eine Dichtung 1 ausgebildet wird. Wenn der Filter 100 in dem Gehäuse 200 montiert ist, so kontaktiert die Dichtung 1 eine Auflagefläche 201 des Gehäuses 200 und wird verpresst, wobei eine Abdichtung bewirkt wird.

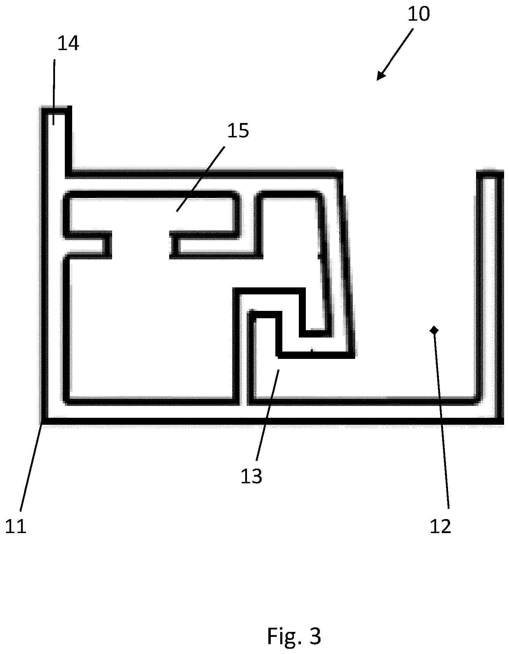

Der Aufbau des Rahmens 10 ist in der Schnittdarstellung von Figur 3 näher dargestellt: Der Rahmen 10 wird gebildet aus extrudierten Leisten 11, welche den bereits erwähnten Vergussraum 12 besitzen. Angrenzend an den Boden des Vergussraums 12 ist ein Hinterschnitt 13 ausgebildet, welcher ebenfalls mit Dichtungs-Vergussmasse 2 befüllbar ist. Der Rahmen 10 besitzt auch einen schlitzförmigen Steckplatz 15, welcher der Aufnahme von Eckverbindern (nicht dargestellt) dient. Die Eckverbinder, zum Beispiel in Form von winkligen Blechen, können in den Steckplatz 15 eingeschoben werden, wobei ein Presssitz bewirkt wird. Mittels eines Eckverbinders können zwei Leisten 11 miteinander verbunden werden.

Weiter besitzt der Rahmen 10 einen Abstandshalter 14, welcher hier als erhabener, umlaufender Steg ausgeführt ist. Wie sich aus der Darstellung von Figur 1 ergibt, bewirkt der Abstandshalter 14, dass die Kompression der Dichtung 1 begrenzt wird und die Dichtung 1 ihre Dichtwirkung behält.

### Bezugszeichenliste

- 1: Dichtung
- 2: Dichtungs-Vergussmasse

- 10: Rahmen
- 11: extrudierte Leiste
- 12: Vergussraum
- 13: Hinterschnitt
- 14: Abstandshalter
- 15: Steckplatz für Eckverbinder

- 20: Filterelement
- 21: Filtermedium
- 22: Kantenstreifen
- 23: Abschnitt Kantenstreifen
- 24: Kontaktfläche Kantenstreifen für Verklebung

- 100: Filter
- 200: Gehäuse / Filteraufnahme
- 201: Auflagefläche
- 1000: Filteranaordnung

- A: Rohgasseite
- B: Reingasseite
- L: Luftstrom

## Patentansprüche

1. Filter (100) mit einem Filterelement (20) mit einem Filtermedium (21) zum Filtern eines Fluidstroms (L), insbesondere von Luft, wobei das Filtermedium (21) plissiert ist, mit einem Rahmen (10) zur Aufnahme des Filterelements (20), wobei das Filtermedium (21) von einem Kantenstreifen (22) umfasst wird,
**dadurch gekennzeichnet, dass**
das Filterelement mittels einer Dichtungs-Vergussmasse mit dem Rahmen verklebt ist,
dass der Rahmen (10) einen nutförmigen und umlaufenden Vergussraum (12) aufweist, der dazu dient, die Dichtungs-Vergussmasse aufzunehmen, und,
dass ein Abschnitt (23) des Kantenstreifens (22), nämlich dessen Ende, von dem Vergussraum (12) aufgenommen und von der Dichtungs-Vergussmasse umschlossen ist, und dass
a) der Rahmen (10) angrenzend an den Boden des Vergussraums (12) einen Hinterschnitt (13) aufweist,
und/oder
b) der Filter (100) mit einer außen an dem Rahmen umlaufenden Dichtung (1) versehen ist und die Dichtungs-Vergussmasse (2) die umlaufende Dichtung (1) ausbildet,
und/oder
c) der Rahmen (10) aus extrudierten Leisten (11) zusammengesetzt ist.

2. Filter nach Anspruch 1 **dadurch gekennzeichnet, dass**
die Dichtungs-Vergussmasse (2) ein geschäumtes Polyurethan (PU) ist.

3. Filter nach Option c) von Anspruch 1 **dadurch gekennzeichnet, dass**
die Leisten (11) mit Eckverbindern verbunden sind und in den Leisten (11) Steckplätze (15) vorgesehen sind zum Einfügen der Eckverbinder.

4. Filter nach einem der vorangehenden Ansprüche **dadurch gekennzeichnet, dass** der Rahmen (10) aus Kunststoff oder Aluminium gebildet ist.

5. Filter nach Option b) von Anspruch 1 **dadurch gekennzeichnet, dass** der Rahmen (10) mindestens einen Abstandshalter (14) besitzt zur Begrenzung der maximalen Dichtungskompression.

6. Filter nach einem der vorangehenden Ansprüche, **dadurch gekennzeichnet, dass** das Filtermedium (21) ein Vliesstoff ist.

7. Filteranordnung (1000) aufweisend einen Filter (100) nach einem der vorangehenden Ansprüche und ein Gehäuse (200), wobei der Filter (100) in dem Gehäuse (200) aufgenommen ist.

8. Verwendung einer Filteranordnung nach Anspruch 7 in der Zuluftfiltration für Kabinen von landwirtschaftlichen Fahrzeugen.

## Claims

1. Filter (100) having a filter element (20) with a filter medium (21) for filtering a fluid stream (L), in particular of air, wherein the filter medium (21) is pleated, having a frame (10) for receiving the filter element (20), wherein the filter medium (21) is encompassed by an edge strip (22),
**characterized in that**
the filter element is adhesively bonded to the frame by means of a sealing compound,
**in that** the frame (10) has a groove-shaped and circumferential compound space (12) which serves to receive the sealing compound, and,
**in that** a section (23) of the edge strip (22), namely the end thereof, is received by the compound space (12) and enclosed by the sealing compound, and **in that**
a) the frame (10) has an undercut (13) adjacent to the base of the compound space (12),
and/or
b) the filter (100) is provided with a seal (1) which encircles externally on the frame and the sealing compound (2) forms the encircling seal (1),
and/or
c) the frame (10) is assembled from extruded strips (11).

2. Filter according to claim 1, **characterized in that**
the sealing compound (2) is an expanded polyurethane (PU).

3. Filter according to option c) of claim 1, **characterized in that**
the strips (11) are connected by corner connectors and in the strips (11) slots (15) are provided for inserting the corner connectors.

4. Filter according to any one of the preceding claims, **characterized in that**
the frame (10) is formed from plastics material or aluminium.

5. Filter according to option b) of claim 1, **characterized in that** the frame (10) possesses at least one spacer (14) for delimiting the maximum compression of the seal.

6. Filter according to any one of the preceding claims, **characterized in that**
the filter medium (21) is a non-woven fabric.

7. Filter assembly (1000) having a filter (100) according to any one of the preceding claims and a housing (200), wherein the filter (100) is received in the housing (200).

8. Use of a filter assembly according to claim 7 in the filtration of supply air for cabins of agricultural vehicles.

## Revendications

1. Filtre (100) comprenant un élément filtrant (20) avec un milieu filtrant (21) pour filtrer un flux de fluide (L), en particulier de l'air, le milieu filtrant (21) étant plissé, avec un cadre (10) pour recevoir l'élément filtrant (20), le milieu filtrant (21) étant entouré d'une bande de bordure (22),
**caractérisé en ce que**
l'élément filtrant est collé au cadre au moyen d'une masse de scellement d'étanchéité,
**en ce que** le cadre (10) présente un espace de scellement (12) en forme de rainure et périphérique, qui sert à recevoir la masse de scellement d'étanchéité, et,
**en ce qu'**une section (23) de la bande de bordure (22), à savoir son extrémité, est reçue par l'espace de scellement (12) et est entourée par la masse de scellement d'étanchéité, et **en ce que**
a) le cadre (10) présente une contre-dépouille (13) adjacente au fond de l'espace de scellement (12),
et/ou
b) le filtre (100) est pourvu d'un joint d'étanchéité (1) périphérique à l'extérieur du cadre et la masse de scellement d'étanchéité (2) forme le joint d'étanchéité périphérique (1),
et/ou
c) le cadre (10) est composé de baguettes extrudées (11).

2. Filtre selon la revendication 1, **caractérisé en ce que**
la masse de scellement d'étanchéité (2) est un polyuréthane expansé (PU).

3. Filtre selon l'option c) de la revendication 1, **caractérisé en ce que**
les baguettes (11) sont reliées par des connecteurs d'angle et dans les baguettes (11) des emplacements (15) sont prévus pour l'insertion des connecteurs d'angle.

4. Filtre selon l'une quelconque des revendications précédentes, **caractérisé en ce que**
le cadre (10) est formé de matière plastique ou d'aluminium.

5. Filtre selon l'option b) de la revendication 1, **caractérisé en ce que** le cadre (10) possède au moins une entretoise (14) pour la limitation de la compression maximale du joint.

6. Filtre selon l'une quelconque des revendications précédentes, **caractérisé en ce que**
le milieu filtrant (21) est un matériau non tissé.

7. Ensemble de filtration (1000) comprenant un filtre (100) selon l'une quelconque des revendications précédentes et un boîtier (200), le filtre (100) étant logé dans le boîtier (200).

8. Utilisation d'un ensemble de filtration selon la revendication 7 dans la filtration de l'air d'alimentation pour des cabines de véhicules agricoles.
